# EUROPEAN PATENT APPLICATION

(11) **EP 4 665 045 A1**
(43) Date of publication of application: **17.12.2025**
(21) Application number: 24756109.5
(22) Date of filing: 05.02.2024
(51) Int. Cl.: H04W 72/0453

(54) **COMMUNICATION METHOD AND DEVICE AND STORAGE MEDIUM**

(30) Priority: 17.02.2023 CN 202310154032
(71) Applicant: ZTE Corporation, Shenzhen, Guangdong 518057 (CN)
(72) Inventor: ZHANG, Chenchen, Shenzhen, Guangdong 518057 (CN); XUE, Fei, Shenzhen, Guangdong 518057 (CN); ZHOU, Wubin, Shenzhen, Guangdong 518057 (CN); LIU, Jing, Shenzhen, Guangdong 518057 (CN)
(74) Representative: Ziebig Hengelhaupt Intellectual Property Attorneys Patentanwaltskanzlei PartGmbB
(86) International application number: PCT/CN2024/076027
(87) International publication number: WO 2024/169735

(57) **Abstract**

Provided are a communication method and device, and a storage medium. The communication method comprises: determining timing information of a first carrier on the basis of timing information about a second carrier, wherein the second carrier is an activated carrier, and the first carrier is an inactive carrier, a carrier to be activated or a carrier using a different physical cell identifier (PCI) from that used by the second carrier.

## Description

The present disclosure claims a priority to Chinese Patent Application No. 202310154032.6, filed on February 17, 2023, which is hereby incorporated by reference in its entirety.

### TECHNICAL FIELD

The present disclosure relates to the technical field of communications, and in particular, to a communication method and apparatus, and a storage medium.

### BACKGROUND

With rapid development of communication networks, in order to enhance a communication rate and increase available frequency band resources, multi-carrier technology has been widely used in communication systems. In a multi-carrier scenario, a base station may configure one or more carriers for a terminal for data transmission.

### SUMMARY

In an aspect, a communication method is provided. The communication method includes:
acquiring timing information related to a second carrier;
determining timing information of a first carrier based on timing information related to a second carrier; where the second carrier is a carrier that has been activated, and the first carrier is a carrier that is not activated, a carrier to be activated, or a carrier with a physical cell identifier (PCI) different from a PCI of the second carrier.

In another aspect, a communication method is provided. The communication method includes:
determining whether a trigger condition for a first measurement feedback is satisfied;
in response to that the trigger condition is satisfied, feeding back a measurement report, where the measurement report includes a measurement result of a third carrier.

In yet another aspect, a communication method is provided. The communication method includes:
performing a trigger operation for a first measurement feedback;
receiving a measurement report, where the measurement report includes a measurement result of a third carrier.

In yet another aspect, a communication method is provided. The communication method includes:
receiving fourth information, where the fourth information is used to indicate whether a terminal is allowed to simultaneously activate a plurality of antenna panels;
activating an antenna panel based on the fourth information.

In yet another aspect, a communication method is provided. The communication method includes:
determining fourth information;
sending the fourth information, where the fourth information is used to indicate whether a terminal is allowed to simultaneously activate a plurality of antenna panels.

In yet another aspect, a communication apparatus is provided. The communication apparatus includes:
a processing module, configured to acquire timing information related to a second carrier; determine timing information of a first carrier based on timing information related to a second carrier; where the second carrier is a carrier that has been activated, and the first carrier is a carrier that is not activated, a carrier to be activated, or a carrier with a PCI different from a PCI of the second carrier.

In yet another aspect, a communication apparatus is provided. The communication apparatus includes:
a processing module, configured to determine whether a trigger condition for a first measurement feedback is satisfied;
a communication module, configured to: feed back a measurement report in response to that the trigger condition is satisfied, where the measurement report includes a measurement result of a third carrier.

In yet another aspect, a communication apparatus is provided. The communication apparatus includes:
a communication module, configured to receive fourth information, where the fourth information is used to indicate whether a terminal is allowed to simultaneously activate a plurality of antenna panels;
a processing module, configured to activate an antenna panel based on the fourth information.

In yet another aspect, a communication apparatus is provided. The communication apparatus includes:
a processing module, configured to determine fourth information;
a communication module, configured to send the fourth information, where the fourth information is used to indicate whether a terminal is allowed to simultaneously activate a plurality of antenna panels.

In yet another aspect, a communication apparatus is provided. The communication apparatus includes: a memory and a processor; the memory and the processor are coupled; the memory is configured to store instructions executable for the processor; the processor, upon executing the instructions, enables the communication apparatus to implement any one of the communication methods described above.

In yet another aspect, a computer-readable storage medium is provided. The computer-readable storage medium stores computer program instructions, where the computer program instructions, upon being executed by a computer, enable the computer to implement any one of the communication methods described above.

In still yet another aspect, a computer program product is provided. The computer program product includes computer program instructions, where the computer program instructions, upon being executed by a computer, enable the computer to implement any one of the communication methods described above.

### BRIEF DESCRIPTION OF THE DRAWINGS

In order to describe the technical solutions in the present disclosure more clearly, accompanying drawings needed to be used in some embodiments of the present disclosure will be introduced briefly below. Obviously, the accompanying drawings described below are merely accompanying drawings of some embodiments of the present disclosure, and an ordinary person of those skilled in the art may obtain other accompanying drawings according to these accompanying drawings.
FIG. 1 is a schematic diagram of a carrier aggregation scenario according to some embodiments.
FIG. 2 is a structural schematic diagram of a communication system according to some embodiments.
FIG. 3 is a flowchart of a communication method according to some embodiments.
FIG. 4 is a flowchart of another communication method according to some embodiments.
FIG. 5 is a flowchart of yet another communication method according to some embodiments.
FIG. 6 is a flowchart of still another communication method according to some embodiments.
FIG. 7 is a structural schematic diagram of a communication apparatus according to some embodiments.
FIG. 8 is a structural schematic diagram of another communication apparatus according to some embodiments.

### DETAILED DESCRIPTION

In order to enable those skilled in the art to better understand the technical solutions in the present disclosure, the technical solutions in the present disclosure will be described clearly and completely in conjunction with the accompanying drawings of the present disclosure. Obviously, the described embodiments are merely a part of embodiments of the present disclosure, but not all of the embodiments. All other embodiments obtained based on the embodiments of the present disclosure by an ordinary person of those skilled in the art without paying any creative effort shall be included in the protection scope of the present disclosure.

It should be noted that in the present disclosure, wordings such as "exemplarily" or "for example" are used to indicate examples, illustrations, or clarifications. Any embodiment or design solution described in the present disclosure with wordings such as "exemplarily" or "for example" should not be illustrated as more preferred or advantageous embodiment or design solution over other embodiments or design solutions. Specifically, the usage of the wordings such as "exemplarily" or "for example" is intended to present relevant concepts in a concrete way.

Hereinafter, terms "first" and "second," etc., are used for descriptive purposes only, and are not to be understood as indicating or implying the relative importance or implicitly indicating a number of indicated technical features. Thus, features limited with the wordings of "first", "second", etc., may explicitly or implicitly include one or more of the features.

In the description of the present disclosure, unless otherwise specified, "/" means an "or" relationship, for example, "A/B" may represent A or B. Term "and/or" in the description merely represents a relevant relationship for describing related objects, which represents that there may be three relationships. For example, A and/or B may represent: only A; only B; or both A and B. In addition, a wording "at least one" represents a number of one or more, and "a plurality of" represents a number more than two.

With rapid development of communication networks, in order to enhance a communication rate and increase available frequency band resources, multi-carrier technology has been widely used in communication systems. Exemplarily, the multi-carrier technology includes, but is not limited to, a carrier aggregation (CA) technology, a dual-connection technology, and a multi-node transmission technology. For ease of understanding, the carrier aggregation technology, the dual-connection technology, and the multi-node transmission technology are briefly introduced below.

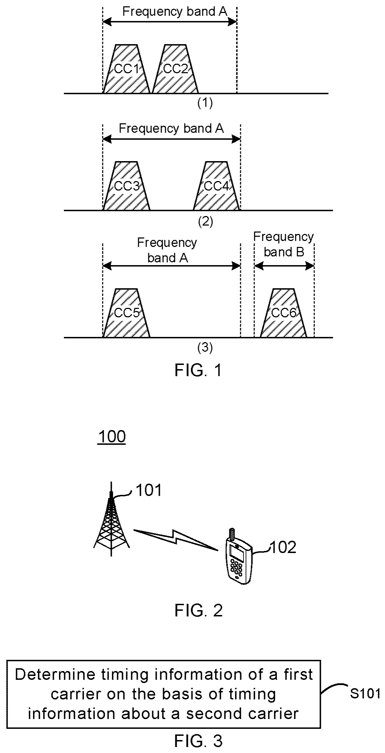

The carrier aggregation aggregates multiple carriers into a whole through a manner of spectrum aggregation to transmit or receive signals. FIG. 1 shows a schematic diagram of a carrier aggregation scenario.

Sections (1) and (2) in FIG. 1 are both examples of intra-band carrier aggregation (intra-band CA). The section (1) in FIG. 1 shows a scenario of intra-band contiguous carrier aggregation. It can be seen that carriers need to be aggregated are in a same frequency band, and there is no gap between the carriers to be aggregated. For example, a carrier CC1 and a carrier CC2 are both located in frequency band A, and there is no gap between the carrier CC1 and the carrier CC2. The section (2) in FIG. 1 shows a scenario of intra-band non-contiguous carrier aggregation. It can be seen that carriers need to be aggregated are in a same frequency band (for example, the frequency band A), but there is a gap between at least two carriers (for example, a CC3 and a CC4).

Section (3) in FIG. 1 shows a scenario of inter-band carrier aggregation (inter-band CA). It can be seen that carriers need to be aggregated are not in a same frequency band, for example, CC5 is located in the frequency band A, and CC6 is located in a frequency band B. Based on the carrier aggregation scenario shown in FIG. 1, discontinuous spectrum resources may be aggregated together, thereby improving utilization rate of spectrum resources.

In the dual-connection technology, a terminal may transmit or receive data through different base stations. For example, the terminal may access two independently operating cell groups, the two independently operating cell groups may be controlled by two different base stations, and the two base stations may adopt different radio standards. Similar to the carrier aggregation technology, the dual-connection technology may also aggregate multiple carriers during communication, and the multiple carriers need to be aggregated may be in the same frequency band or in different frequency bands.

In the multi-node transmission technology, multiple nodes used for transmission correspond to a same or different carriers; when the multiple nodes correspond to the same carrier, the multiple nodes share a same physical cell identifier (physical cell ID, PCI). When the multiple nodes correspond to different carriers, the multiple nodes use different PCIs. The carriers corresponding to the multiple nodes may be in the same frequency band or in different frequency bands.

The communication method provided in the embodiments of the present disclosure may be applied to systems in various communication standards. For example, the method provided in the embodiments of the present disclosure may be applicable to systems, including but not limited to, a long term evolution (LTE) system, various versions based on LTE advanced, a 5th generation (5G) system, and a new radio (NR), or other next generation communication systems. In addition, the communication method provided in the embodiments of the present disclosure may further be applicable to future-oriented communication technologies, etc. For ease of understanding, a communication system involved in the embodiments of the present disclosure is exemplarily introduced below. FIG. 2 shows a structural schematic diagram of a communication system provided in the embodiments of the present disclosure.

Referring to FIG. 2, the communication system 100 includes: a base station 101 and a terminal 102.

The base station 101 may configure one or more carriers for the terminal 102. It should be understood that, the base station 101 may further perform the communication method provided in the present disclosure, which is not limited in the embodiments of the present disclosure. Forms of the base station 101 include, but are not limited to, a macro base station, a micro base station (also referred to as a small station), a relay station, an access point, etc. In systems adopting different radio access technologies, names of base stations or devices having functions of base station may be different. For example, in the 5th generation system, a base station is referred to as RAN (radio access network). In the LTE system, a base station is referred to as an evolved NodeB (eNB or eNodeB). In the 3rd generation (3G) system, a base station is referred to as a Node B, etc., which are not limited in the embodiments of the present disclosure.

The terminal 102 may perform data transmission with the base station 101 through one or more carriers. For example, the terminal 102 may perform data transmission on some carriers that have been activated. It should be understood that, the terminal 102 may further perform the communication method provided in the present disclosure, which is not limited in the embodiments of the present disclosure. The terminal 102 may also be referred to as a terminal device, a user equipment (UE), a mobile station, a mobile terminal, etc. The terminal may be a mobile phone, a tablet computer, a computer with wireless transceiver functions, a virtual reality terminal device, an augmented reality terminal device, a wireless terminal in industrial control, a wireless terminal in self driving, a wireless terminal in a remote surgery, a wireless terminal in transportation safety, a wireless terminal in a smart city, or a wireless terminal in a smart home, etc. A device form and technology adopted for the terminal is not limited in the embodiments of the present disclosure.

It should be noted that, the above-mentioned communication system may have other names (for example, communication network, network system, network architecture, or communication architecture, etc.), and the above-mentioned communication system may further include other network structures, such as core network elements, etc., which are not limited in the embodiments of the present disclosure.

It should be understood that the above-mentioned communication system is merely for more clearly illustrating the technical solutions of the present disclosure, and does not constitute a limitation on the present disclosure. Those of ordinary skill in the art should know that with the evolution of the network architecture and the emergence of new service scenarios, the technical solutions provided in the present disclosure are also applicable to similar technical problems.

In a multi-carrier scenario (for example, the above-mentioned carrier aggregation), a base station may configure one or more carriers for a terminal for data transmission. When using a carrier to transmit data, it is sometimes necessary to acquire timing information of a carrier that is not activated or a carrier to be activated. In some technologies, for example, in the above inter-band CA technology, timing information of a carrier that is not activated or a carrier to be activated is generally acquired by receiving a pilot signal and performing calculation on the pilot signal. However, this method for determining the timing information requires a large amount of calculation and has low efficiency.

In this regard, a communication method is provided in the embodiments of the present disclosure. Referring to FIG. 3, the method includes the following step S101.

In S101, timing information of a first carrier is determined based on timing information related to a second carrier.

The second carrier is a carrier that has been activated.

In some embodiments, the timing information related to the second carrier includes, but is not limited to: timing information of the second carrier, and/or timing information of a frequency band where the second carrier is located.

In some embodiments, the first carrier is a carrier that is not activated, a carrier to be activated, or a carrier with a PCI different from a PCI of the second carrier. The carrier with the PCI different from the PCI of the second carrier may be a carrier that has been activated, or a carrier that is not activated, or a carrier to be activated.

In some embodiments, timing information includes a boundary of a time unit, and/or an index of a time unit. For example, a time unit includes at least one of: a radio frame, a half-frame, a subframe, a slot, or an orthogonal frequency division multiplexing (OFDM) symbol.

In some embodiments, the first carrier and the second carrier satisfy quasi co-location-Type A (QCL-Type A). In some embodiments, in a case where the first carrier satisfies QCL-Type A, a time unit of timing information may include an OFDM symbol.

It should be noted that the above "the first carrier and the second carrier satisfy QCL-Type A" may also have other description modes. Exemplarily, "the first carrier and the second carrier satisfy QCL-Type A" may also be described as: a reference signal of the first carrier and a reference signal of the second carrier satisfy QCL-Type A; where a reference signal includes a pilot signal, and the pilot signal includes: an SSB and/or a CSI-RS. It should be understood that the present disclosure does not limit thereto.

In some embodiments, the first carrier and the second carrier satisfy quasi co-location-Type C (QCL-Type C). In some embodiments, in a case where the first carrier satisfies QCL-Type C, a time unit of the timing information may include a slot.

Similarly, the above "the first carrier and the second carrier satisfy QCL-Type C" may also have other description manners. Exemplarily, "the first carrier and the second carrier satisfy QCL-Type C" may also be described as: a reference signal of the first carrier and a reference signal of the second carrier satisfy QCL-Type C; where a reference signal includes a pilot signal, and the pilot signal includes: an SSB and/or a CSI-RS. It should be understood that the present disclosure does not limit thereto.

In some embodiments, timing information of a carrier is related to a QCL-Type satisfied by the carrier. Exemplarily, for all carriers satisfying QCL-Type C, types of time units of timing information of the carriers are the same. Alternatively, for all carriers satisfying QCL-Type A, types of time units of timing information of the carriers are the same. For example, in a case where the first carrier and the second carrier satisfy QCL-Type A, time units in the timing information both include an OFDM symbol.

In some embodiments, the timing information of the first carrier is consistent with the timing information of the second carrier.

In some other embodiments, there is a time offset between the timing information of the first carrier and the timing information of the second carrier.

In yet other embodiments, the timing information of the first carrier is consistent with the timing information of a frequency band where the second carrier is located.

In still other embodiments, there is a time offset between the timing information of the first carrier and the timing information of the frequency band where the second carrier is located.

In some embodiments, the time offset may be configured through a signaling, determined through a system predefinition manner, or configured by default. For example, the time offset may be a time offset configured by system predefinition, or may be a time offset indicated by a MAC CE or an RRC signaling of the base station. In this way, the timing information of the first carrier may be directly determined based on the time offset and the timing information of the frequency band where the second carrier is located, or the timing information of the first carrier may be directly determined based on the time offset and the timing information of the second carrier, thereby avoiding a conventional acquisition procedure of timing information (for example, calculation on a pilot signal) and improving the acquisition efficiency of the timing information.

In some embodiments, the second carrier includes any one of:
a carrier contiguous with the first carrier in frequency domain among all carriers that have been activated;
a carrier with a smallest frequency domain gap from the first carrier among all carriers that have been activated;
a carrier corresponding to a special cell among all carriers that have been activated, where the special cell includes a primary cell and/or a primary secondary cell; or
a carrier with a frequency domain gap from the first carrier not exceeding a preset gap among all carriers that have been activated.

The preset gap may be configured through a signaling or may be determined through a system predefinition manner. For example, in a case where the second carrier is a carrier with a frequency domain gap from the first carrier not exceeding a preset gap among all carriers that have been activated, if the frequency domain gap between the second carrier and the first carrier does not exceed the preset gap, the timing information of the first carrier is consistent with the timing information of the second carrier or there is a time offset between the timing information of the first carrier and the timing information of the second carrier.

It should be noted that, although only implementations of the second carrier are shown above, it is not difficult to think about that the frequency band where the second carrier is located may also be determined with reference to the implementations of the second carrier. For example, in a case where the second carrier includes a carrier contiguous with the first carrier in frequency domain among all carriers that have been activated, the frequency band where the second carrier is located may include a frequency band where the carrier contiguous with the first carrier in frequency domain among all carriers that have been activated is located, and so on, which is not repeated herein.

In some embodiments, the frequency band where the second carrier is located includes any one of:
a frequency band contiguous with the first carrier in frequency domain among frequency bands where all carriers that have been activated are located;
a frequency band with a smallest frequency domain gap from the first carrier among the frequency bands where all carriers that have been activated are located; or
a frequency band that forms a preset frequency band combination with a frequency band where the first carrier is located among the frequency bands where all carriers that have been activated are located.

The preset frequency band combination may be configured through a signaling or may be determined through a system predefinition manner. In an embodiment, if the preset frequency band combination includes: a first combination {first frequency band, second frequency band}, a second combination {second frequency band, fourth frequency band}, and the frequency band where the first carrier (i.e., a carrier that is not activated or a carrier to be activated) is located is the second frequency band, then the frequency band where the second carrier is located includes at least one of: the first frequency band or the fourth frequency band.

Similarly, although only implementations of the frequency band where the second carrier is located are shown above, it is not difficult to think about that the second carrier may also be determined with reference to the implementations of the frequency band where the second carrier is located. For example, in a case where the frequency band where the second carrier is located includes a frequency band contiguous with the first carrier in frequency domain among frequency bands where all carriers that have been activated are located, the second carrier may include a carrier that has been activated on a frequency band contiguous with the first carrier in frequency domain among frequency bands where all carriers that have been activated are located, and so on, which is not repeated herein.

In some embodiments, contents included in the second carrier or the frequency band where the second carrier is located may be preconfigured by a system, may be default, or may be configured through a signaling, which is not limited herein.

In the embodiments of the present disclosure, timing information of a carrier that is not activated, a carrier to be activated, or a carrier with a PCI different from a PCI of the carrier that has been activated may be determined through timing information related to the carrier that has been activated (for example, timing information of the carrier that has been activated itself, or timing information of a frequency band where the carrier that has been activated is located), thereby eliminating a complex acquisition procedure in related technologies of receiving a pilot signal and acquiring timing information according to the pilot signal, and improving the acquisition efficiency of timing information of the carrier that is not activated, the carrier to be activated, or the carrier with the PCI different from the PCI of the carrier that has been activated. In addition, in a scenario where carrier activation is required, a speed of carrier activation may be improved by shortening time of a portion of carrier activation steps (for example, a step of acquiring timing information).

In some embodiments, before step S101, the above-mentioned method further includes: acquiring the timing information related to the second carrier.

An acquisition method of the timing information of the second carrier is not limited in the embodiments of the present disclosure. For example, the timing information of the second carrier may be obtained by detecting a pilot signal of the second carrier. As another example, the timing information of the second carrier may be known.

An acquisition method of the timing information of the frequency band where the second carrier is located is not limited in the embodiments of the present disclosure. For example, the timing information of the frequency band where the second carrier is located may be determined according to timing information of all carriers that have been activated on that frequency band. As another example, the timing information of the frequency band where the second carrier is located may be known.

In some embodiments, the timing information of the first carrier is determined by default based on the timing information of the second carrier or the timing information of the frequency band where the second carrier is located.

In some embodiments, the above communication method is perform only in a case where a signaling for indication is received. Exemplarily, the above-mentioned method further includes: receiving first information, where the first information is used to indicate to determine the timing information of the first carrier based on the timing information of the second carrier or the timing information of the frequency band where the second carrier is located. Further, taking an execution entity of the above-mentioned method being a terminal as an example, in a case where the first information is received, the terminal determines the timing information of the first carrier based on the timing information of the second carrier or the timing information of the frequency band where the second carrier is located.

In an embodiment, the first information may be carried in a radio resource control (RRC) signaling or a media access control control element (MAC CE).

In an embodiment, the first information may include an identifier of the second carrier or an identifier of the frequency band where the second carrier is located. In this way, the second carrier or the frequency band where the second carrier is located may be determined more quickly, thus improving the acquisition efficiency of timing information.

In an embodiment, the first information may include a time offset. For example, the first information may include a time offset between the timing information of the second carrier and the timing information of the first carrier, so as to determine the timing information of the first carrier based on the timing information of the second carrier and the time offset. As another example, the first information may include a time offset between the timing information of the frequency band where the second carrier is located and the timing information of the first carrier, so as to determine the timing information of the first carrier based on the timing information of the frequency band where the second carrier is located and the time offset.

For radio resource management (RRM) measurement and measurement result feedback, current communication systems support periodic feedback and event-triggered feedback. For event-triggered feedback, a protocol specifies several trigger events; when a trigger event is satisfied, a measurement result feedback of a user is triggered. However, no matter which type of trigger event, it cannot meet a requirement for a user to quickly feed back a measurement result of a carrier to be activated.

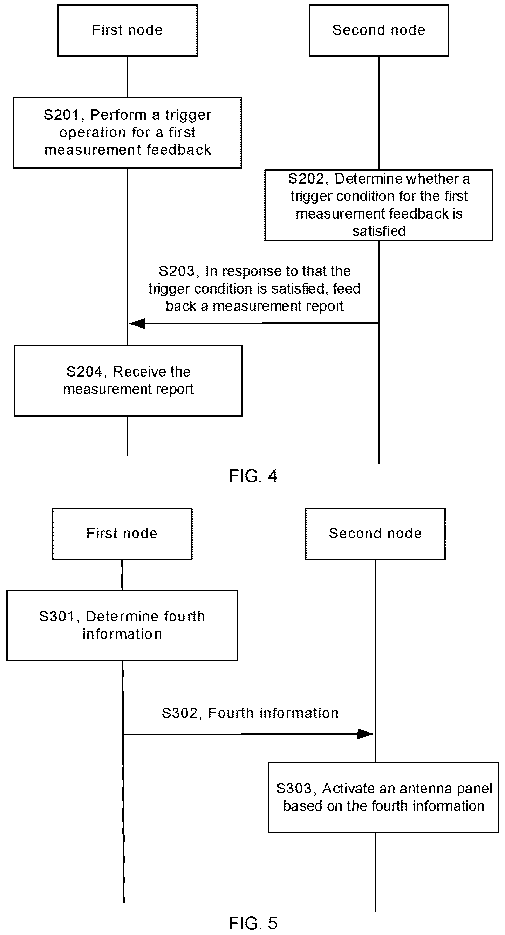

In this regard, as shown in FIG. 4, another communication method is provided in the present disclosure. Referring to FIG. 4, the method includes the following S201 to S204.

In S201, a first node performs a trigger operation for a first measurement feedback.

The first measurement feedback is used to feed back a measurement report carrying a measurement result of a third carrier. The first measurement feedback may have other names, such as fast measurement feedback, etc., which is not limited in the present disclosure.

In some embodiments, the third carrier may be a carrier that is not activated or a carrier to be activated.

In some embodiments, the first node may be a base station or a device with functions of base station.

In some embodiments, different from a measurement feedback in related technologies, the first measurement feedback in the embodiments of the present disclosure may enable the first node to acquire the measurement result of the third carrier faster.

In some embodiments, the trigger operation includes at least one of:
sending information for activating the third carrier;
sending information for indicating to perform the first measurement feedback.

In some embodiments, the information for activating the third carrier may be carried in an SCell activation command MAC CE (i.e., a secondary cell activation command MAC CE).

In some embodiments, the information for indicating to perform the first measurement feedback may be carried in a MAC CE or PDCCH DCI (downlink control information). In an embodiment, the information for indicating to perform the first measurement feedback may include an identifier of the third carrier. In an embodiment, the information for indicating to perform the first measurement feedback may be carried in an SCell activation command MAC CE for indicating to activate the third carrier.

In some embodiments, the information for activating the third carrier and/or the information for indicating to perform the first measurement feedback may include a state of the third carrier. According to the network side's awareness condition about a channel feature of the third carrier, the state of the third carrier may be divided into a first state, a second state, and a third state in the embodiments of the present disclosure. The first state indicates that the network side is unaware of a channel feature of the third carrier. The second state indicates that the network side at least is aware of a portion of channel features of the third carrier. The third state indicates that the network side is aware of all channel feature of the third carrier. Exemplarily, a carrier in the first state may be referred to as an unknown carrier, a carrier in the second state may be referred to as a semi-unknown carrier, and a carrier in the third state may be referred to as a known carrier. It should be noted that the network side includes a base station or other devices with functions of base station, which is not limited in the present disclosure.

In S202, a second node determines whether a trigger condition for the first measurement feedback is satisfied.

In some embodiments, the second node may be a terminal or a device with functions of terminal.

In some embodiments, the trigger condition includes receiving the information for activating the third carrier. In some embodiments, the information for indicating to activate the third carrier is carried in an SCell activation command MAC CE.

In some embodiments, the trigger condition includes receiving information for activating the third carrier and determining that the third carrier is in the first state. In one example, the second node may determine the state of the third carrier by the second node itself. In an embodiment, the second node may determine the state of the third carrier according to information sent by the first node (for example, the information for activating the third carrier and/or the information for indicating to perform the first measurement feedback).

In some embodiments, the trigger condition includes receiving information for indicating to perform the first measurement feedback. In some embodiments, the information for indicating to perform the first measurement feedback may be carried in a MAC CE or PDCCH DCI. In an embodiment, the MAC CE may be an SCell activation command MAC CE for indicating to activate the third carrier. In some embodiments, the information for indicating to perform the first measurement feedback includes an identifier of the third carrier, so as to indicate triggering the first measurement feedback for the third carrier.

Further, the second node may also enter the first measurement feedback in a case where the trigger condition for the first measurement feedback is satisfied. For example, in a case where the trigger condition for the first measurement feedback is satisfied, perform fast measurement feedback for the third carrier.

In S203, in response to that the trigger condition is satisfied, the second node feeds back a measurement report.

In some embodiments, the measurement report may include a measurement result of the third carrier. In some embodiments, the above-mentioned measurement result of the third carrier may be a measurement result of the third carrier at a historical moment.

In some embodiments, the measurement result of the third carrier is a valid measurement result of the third carrier. A valid measurement result is a measurement result satisfying one or more of the following rules:
the measurement result being a radio resource management (RRM) measurement result, for example, the measurement result may be an RRM measurement result of the third carrier;
the measurement result being a physical layer measurement result, for example, the measurement result may be a physical layer measurement result of the third carrier;
a time gap between a moment of generating the measurement result or a moment of last measurement and a current moment not exceeding a time threshold;
the measurement result including one or more of: a reference signal received power (RSRP) corresponding to the third carrier, an RSPR1 corresponding to the third carrier, a signal-to-interference-plus-noise ratio (SINR) corresponding to the third carrier, a synchronization signal and physical broadcast channel (PBCH) block (i.e., synchronization signal and PBCH block (SSB)) index, or a channel state information reference signal (CSI-RS) index.

In S204, the first node receives the measurement report.

In some embodiments, the first node determines that the third carrier is in the first state in response to that the measurement result of the third carrier is not received. The first state indicates that the network side is unaware of a channel feature of the third carrier. Alternatively, the first node determines that the third carrier is in the second state in response to that the measurement result of the third carrier is received, where the second state indicates that the network side at least is aware of a portion of channel features of the third carrier.

In some embodiments, the first node determines that the third carrier is in the first state in response to that a valid measurement result of the third carrier is not received, where the first state indicates that a network side is unaware of a channel feature of the third carrier; or the first node determines that the third carrier is in the second state in response to that the valid measurement result of the third carrier is received, where the second state indicates that the network side at least is aware of a portion of channel features of the third carrier.

Further, in a case where the state of the third carrier is determined, the first node may also send a signaling for indicating the state of the third carrier to the second node. For example, the first node may periodically send a signaling for indicating the state of the third carrier to the second node. As another example, in a case where the first node determines that the third carrier is in the second state, the first node actively sends a signaling for indicating the state of the third carrier to the second node. As yet another example, in a case where the first node indicates the second node to activate the third carrier, the first node sends a signaling for indicating the state of the third carrier to the second node. As yet another example, the signaling for indicating the state of the third carrier may be carried in a MAC CE or PDCCH DCI. In this way, the second node may also be informed of a real-time state of the third carrier.

It can be seen that the embodiments of the present disclosure may enable the first node to know the measurement result or valid measurement result of the third carrier, thereby improving the activation efficiency when the third carrier needs to be activated.

In some embodiments, to facilitate control of the procedure of the first measurement feedback, the first measurement feedback may be associated with a first event, where the first event is used to trigger to control of the procedure of the first measurement feedback.

In some embodiments, the first node may send configuration information of the first event to the second node; correspondingly, the second node receives the configuration information of the first event. In some embodiments, the configuration information of the first event includes a first time gap, where the first time gap is a time gap from a moment of determining that the trigger condition is satisfied to a moment of feeding back the measurement report.

For example, the first time gap may be N milliseconds (ms), where N is a non-negative integer. For example, N may be any integer within [0, 39]. In an embodiment, N may be 0.

For example, the first time gap may be defined in the following format: 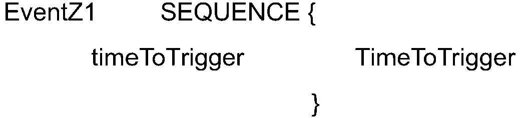 timeToTrigger is used to represent the first time gap.

Based on this, the above-mentioned step S203 may be implemented as: starting from a moment of satisfying the trigger condition, after the first time gap is passed, the second node feeds back the measurement report. In this way, the impact of the Ping-Pong effect on feedback accuracy may be avoided.

In some embodiments, the configuration information of the first event includes an event entry condition, where the event entry condition includes at least one of: satisfying the trigger condition, or there being a valid measurement result. In this way, in a case where the event entry condition is satisfied, the second node enters the first measurement feedback.

In some embodiments, the configuration information of the first event includes an event ending condition, where the event ending condition includes at least one of: the second node completing feedback for one or more measurement results; the second node completing feedback for one or more valid measurement results; the second node receiving information for indicating that the third carrier is in the second state; or the second node receiving information for indicating that the first node at least is aware of a portion of channel features of the third carrier. Further, in a case where the event ending condition is satisfied, the first measurement feedback is exited.

In this way, the procedure of the first measurement feedback may be controlled through the first event, and the third carrier may be put into the second state, or the first node may be made to at least be aware of a portion of channel features of the third carrier.

In some embodiments, the above-mentioned method further includes: in a case where the third carrier is in the second state, the first node sends a signaling to the second node for indicating to perform a second activation procedure on the third carrier; or in a case where the third carrier is in the second state, the first node sends a signaling to the second node for indicating that the third carrier is in the second state.

Correspondingly, in a case where the third carrier is in the second state, the second node performs the second activation procedure to activate the third carrier. For example, in a case where the signaling for indicating that the third carrier is in the second state is received, the second node performs the second activation procedure to activate the third carrier. As another example, in a case where the second node itself determines that the third carrier is in the second state, the second node performs the second activation procedure to activate the third carrier. As yet another example, in a case where a signaling for indicating to perform the second activation procedure on the third carrier is received, the second node performs the second activation procedure to activate the third carrier.

Operations of the second activation procedure is fewer than operations included in a first activation procedure, where the first activation procedure is a regular carrier activation procedure in related technologies, which may refer to the description for related technologies, and is not repeated herein.

In some embodiments, the second activation procedure includes one or more of:
ignoring an automatic gain control (AGC) operation for the third carrier (i.e., AGC can be ignored);
reducing a receiving (Rx) beam sweeping factor (i.e., Rx beam sweeping factor can be reduced);
reducing a number of automatic gain control measurement samples for the third carrier (i.e., a number of AGC measurement samples can be reduced);
determining timing information of the third carrier based on timing information of a carrier that has been activated or timing information of a frequency band where a carrier that has been activated is located.

Based on this, in a case where the first node at least is aware of a portion of channel features of the third carrier, the activation procedure may be simplified, thereby improving the activation efficiency for the third carrier.

Considering that during communication is performed in related technologies, only one antenna panel is usually used for communication, which may make it difficult to cope with large load demands or difficult to cover beams in many directions. In this regard, the present disclosure further provides a communication method, as shown in FIG. 5, where the method includes steps S301 to S303.

In S301, a first node determines fourth information.

The fourth information is used to indicate whether a second node is allowed to simultaneously activate a plurality of antenna panels.

In some embodiments, the fourth information may directly indicate that the second node is allowed to simultaneously activate a plurality of antenna panels. In other embodiments, the fourth information may indirectly indicate that the second node is allowed to simultaneously activate a plurality of antenna panels, which is not limited in the present disclosure.

In some embodiments, the first node may allow the second node to simultaneously activate a plurality of antenna panels by default or disallow the second node to simultaneously activate a plurality of antenna panels by default.

In some embodiments, the first node may determine the fourth information according to whether the second node needs to activate a plurality of antenna panels.

In S302, the first node sends the fourth information. Correspondingly, the second node receives the fourth information.

In some embodiments, the fourth information may be carried in an RRC signaling or MAC CE. Alternatively, the fourth information may also be carried in other possible control information, which is not limited in the present disclosure.

In some embodiments, the fourth information includes an enable indication bit. The enable indication bit taking a first value indicates that the second node is not allowed to simultaneously activate a plurality of antenna panels; or the enable indication bit taking a second value indicates that the second node is allowed to simultaneously activate a plurality of antenna panels. In an embodiment, the first value may be "0", and the second value may be "1". It should be understood that, data for the enable indication bit is not limited in the present disclosure.

In S303, the second node activates an antenna panel based on the fourth information.

In some embodiments, in a case where the fourth information indicates that the second node is allowed to simultaneously activate a plurality of antenna panels, the second node activates a plurality of antenna panels. In this way, the second node may use the plurality of antenna panels for data transmission, which may accommodate larger load requirements and cover more beam directions.

In some embodiments, in a case where the fourth information indicates that the second node is not allowed to simultaneously activate a plurality of antenna panels, the second node activates an antenna panel. In this way, the second node may use one antenna panel for data reception or data sending, and due to covering only one beam direction in a case with smaller service demand, power is saved.

In some embodiments, in a case where data transmission is performed according to a plurality of antenna panels, the second node may acquire a downlink signal sent by the first node through a plurality of beam directions; or the first node may acquire an uplink signal sent by the second node through the plurality of beam directions. Taking the second node being a terminal and the first node being a base station as an example, the above-mentioned downlink signal includes, but is not limited to, a physical downlink shared channel (PDSCH), a physical downlink control channel (PDCCH), an SSB, a CSI-RS, and a demodulation reference signal (DMRS); the above-mentioned uplink signal includes, but is not limited to, a physical uplink shared channel (PUSCH), a physical uplink control channel (PUCCH), a sounding reference signal (SRS), or a DMRS.

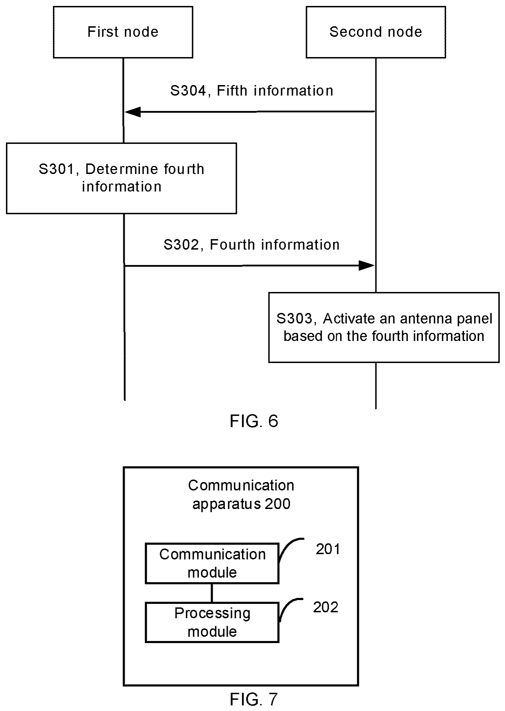

In some embodiments, as shown in FIG. 6, before step S301, the method may further include following step S304.

In S304, the second node sends fifth information to the first node.

The fifth information is used to indicate whether the second node needs to activate a plurality of antenna panels.

In some embodiments, the fifth information may directly indicate whether the second node needs to activate a plurality of antenna panels. In some embodiments, the fifth information may indirectly indicate whether the second node needs to activate a plurality of antenna panels, which is not limited in the present disclosure.

Based on this, the first node may determine whether to allow the second node to simultaneously activate a plurality of antenna panels according to actual requirements of the second node (for example, whether the plurality of antenna panels need to be activated), thereby achieving flexible control over antenna panel activation of the second node.

In one aspect, a communication method is provided in the embodiments of the present disclosure, where the method includes: acquiring timing information related to a second carrier; determining timing information of a first carrier based on the timing information related to the second carrier; where the second carrier is a carrier that has been activated, and the first carrier is a carrier that is not activated, a carrier to be activated, or a carrier with a physical cell identifier (PCI) different from a PCI of the second carrier.

In some embodiments, the timing information related to the second carrier includes timing information of the second carrier.

In some embodiments, the timing information of the first carrier is consistent with the timing information of the second carrier; or there is a time offset between the timing information of the first carrier and the timing information of the second carrier.

In some embodiments, the second carrier includes any one of: a carrier contiguous with the first carrier in frequency domain among all carriers that have been activated; a carrier with a smallest frequency domain gap from the first carrier among all carriers that have been activated; a carrier with a frequency domain gap from the first carrier not exceeding a preset gap among all carriers that have been activated; a carrier corresponding to a special cell among all carriers that have been activated. The special cell includes a primary cell and/or a primary secondary cell.

In some embodiments, the preset gap is configured through a signaling or is determined through a system predefinition manner.

In some embodiments, the timing information related to the second carrier includes timing information of a frequency band where the second carrier is located.

In some embodiments, the timing information of the first carrier is consistent with the timing information of a frequency band where the second carrier is located; or there is a time offset between the timing information of the first carrier and the timing information of the frequency band where the second carrier is located.

In some embodiments, the frequency band where the second carrier is located includes any one of: a frequency band contiguous with the first carrier in frequency domain among frequency bands where all carriers that have been activated are located; a frequency band with a smallest frequency domain gap from the first carrier among the frequency bands where all carriers that have been activated are located; a frequency band that forms a preset frequency band combination with a frequency band where the first carrier is located among the frequency bands where all carriers that have been activated are located; a frequency band where a carrier corresponding to a special cell is located among the frequency bands where all carriers that have been activated are located.

In some embodiments, the preset frequency band combination is configured through a signaling or is determined through a system predefinition manner.

In some embodiments, the above-mentioned communication method further includes: receiving first information, where the first information is used to indicate to determine the timing information of the first carrier based on the timing information of the second carrier or the timing information of the frequency band where the second carrier is located.

In some embodiments, the first information includes an identifier of the second carrier or an identifier of the frequency band where the second carrier is located.

In some embodiments, the first information includes a time offset.

In some embodiments, timing information includes a boundary of a time unit, and/or an index of a time unit.

In another aspect, a communication method is provided in embodiments of the present disclosure, the method includes: determining whether a trigger condition for a first measurement feedback is satisfied; in response to that the trigger condition is satisfied, feeding back a measurement report, where the measurement report includes a measurement result of a third carrier.

In some embodiments, the trigger condition includes at least one of: receiving information for activating the third carrier; receiving the information for activating the third carrier, and determining that the third carrier is in a first state; receiving information for indicating to perform the first measurement feedback. The first state indicates that the network side is unaware of a channel feature of the third carrier.

In some embodiments, the above-mentioned communication method further includes: receiving configuration information of a first event, where the configuration information of the first event includes a first time gap, and the first time gap is a time gap from a moment of determining that the trigger condition is satisfied to a moment of feeding back the measurement report.

In some embodiments, the configuration information of the first event further includes an event entry condition, where the event entry condition includes at least one of: satisfying the trigger condition, or there being a valid measurement result.

In some embodiments, the valid measurement result is a measurement result satisfying one or more of the following rules: the measurement result being a radio resource management (RRM) measurement result, for example, an RRM measurement result of the third carrier; the measurement result being a physical layer measurement result, for example, a physical layer measurement result of the third carrier; a time gap between a moment of generating the measurement result or a moment of last measurement and a current moment not exceeding a time threshold. The measurement result includes one or more of: a reference signal received power (RSRP) corresponding to the third carrier, an RSPR1 corresponding to the third carrier, a signal-to-interference-plus-noise ratio (SINR) corresponding to the third carrier, a synchronization signal and physical broadcast channel block (SSB) index, or a channel state information reference signal (CSI-RS) index.

In some embodiments, the configuration information of the first event further includes an event ending condition, where the event ending condition includes: completing feedback for one or more measurement results.

In some embodiments, the above-mentioned communication method further includes: in a case where the third carrier is in a second state, performing a second activation procedure to activate the third carrier; where operations included in the second activation procedure is fewer than operations included in a first activation procedure, and the second state indicates that a network side at least is aware of a portion of channel features of the third carrier.

In some embodiments, the second activation procedure includes one or more of: ignoring an automatic gain control operation on the third carrier; reducing a receiving beam sweeping factor; reducing a number of automatic gain control measurement samples for the third carrier; determining timing information of the third carrier based on timing information of a carrier that has been activated or timing information of a frequency band where a carrier that has been activated is located.

In yet another aspect, a communication method is further provided in the embodiments of the present disclosure, where the method includes: performing a trigger operation for a first measurement feedback; receiving a measurement report, where the measurement report includes a measurement result of a third carrier.

In some embodiments, the trigger operation includes at least one of: sending information for activating the third carrier, or sending information for indicating to perform the first measurement feedback.

In some embodiments, the above-mentioned communication method further includes: in response to that a valid measurement result of the third carrier is not received, determining that the third carrier is in a first state, where the first state indicates that a network side is unaware of a channel feature of the third carrier; or in response to that a valid measurement result of the third carrier is received, determining that the third carrier is in a second state, where the second state indicates that the network side at least is aware of a portion of channel features of the third carrier.

In some embodiments, the valid measurement result is a measurement result satisfying one or more of the following rules: the measurement result being a radio resource management (RRM) measurement result, for example, an RRM measurement result of the third carrier; the measurement result being a physical layer measurement result, for example, a physical layer measurement result of the third carrier; a time gap between a moment of generating the measurement result or a moment of last measurement and a current moment not exceeding a time threshold. The measurement result includes one or more of: a reference signal received power (RSRP) corresponding to the third carrier, an RSPR1 corresponding to the third carrier, an SINR corresponding to the third carrier, an SSB index, or a CSI-RS index.

In some embodiments, the above-mentioned communication method further includes: in response to that the third carrier is in a second state, indicating a terminal to perform a second activation procedure to activate the third carrier; where operations included in the second activation procedure is fewer than operations included in a first activation procedure, the second state indicates that a network side at least is aware of a portion of channel features of the third carrier.

In some embodiments, the second activation procedure includes one or more of: ignoring an automatic gain control operation on the third carrier; reducing a receiving beam sweeping factor; reducing a number of automatic gain control measurement samples for the third carrier; determining timing information of the third carrier based on timing information of a carrier that has been activated or timing information of a frequency band where a carrier that has been activated is located.

In yet another aspect, a communication method is further provided in the embodiments of the present disclosure, where the method includes: receiving fourth information, where the fourth information is used to indicate whether a second node is allowed to simultaneously activate a plurality of antenna panels; activating an antenna panel based on the fourth information.

In some embodiments, activating the antenna panel based on the fourth information includes: in response to that the fourth information indicates that the second node is allowed to simultaneously activate a plurality of antenna panels, activating a plurality of antenna panels; or in response to that the fourth information indicates that the second node is not allowed to simultaneously activate a plurality of antenna panels, activating an antenna panel.

In some embodiments, the fourth information includes an enable indication bit; the enable indication bit taking a first value indicates that the second node is not allowed to simultaneously activate a plurality of antenna panels; or the enable indication bit taking a second value indicates that the second node is allowed to simultaneously activate a plurality of antenna panels.

In some embodiments, the above-mentioned communication method further includes: sending fifth information, where the fifth information is used to indicate whether the second node needs to activate a plurality of antenna panels.

In yet another aspect, a communication method is provided in embodiments of the present disclosure, the method includes: determining fourth information, where the fourth information is used to indicate whether a second node is allowed to simultaneously activate a plurality of antenna panels; sending the fourth information.

In some embodiments, the fourth information includes an enable indication bit; the enable indication bit taking a first value indicates that the second node is not allowed to simultaneously activate a plurality of antenna panels; or the enable indication bit taking a second value indicates that the second node is allowed to simultaneously activate a plurality of antenna panels.

In some embodiments, the above-mentioned communication method further includes: receiving fifth information, where the fifth information is used to indicate whether the second node needs to activate a plurality of antenna panels.

The solutions provided in the embodiments of the present disclosure are introduced above from the perspective of methods. A communication apparatus is further shown below, which is configured to perform the communication method in any of the above-mentioned embodiments and possible implementations thereof. It can be understood that, in order to implement the above functions, the communication apparatus includes corresponding hardware structures and/or software modules for implementing various functions. Those skilled in the art should easily realize that the present disclosure may be implemented in the form of hardware or a combination of hardware and computer software in combination with algorithms and steps described in the embodiments of the present disclosure. Whether a certain function is implemented by hardware or by computer software driving hardware depends on the specific application and design constraint conditions of the technical solutions. A professional technician may use different methods to implement the described functions for each specific application, but such implementation should not be considered beyond the scope of the present disclosure.

The communication apparatus may be divided into functional modules according to the above method embodiments in the present disclosure. For example, each functional module may be divided corresponding to each function, or two or more functions may be integrated into one functional module. The integrated module may implemented in the form of hardware, or may be implemented in the form of software. It should be noted that, the division for the modules in the embodiments of the present disclosure is illustrated, which is only a logical functional division, and there may be other division manners in actual implementation. It should be understood that, the above-mentioned module may also referred to as a unit. The following is illustrated by taking an example of a division of each functional module corresponding to each function.

FIG. 7 is a structural schematic diagram of a communication apparatus provided in the embodiments of the present disclosure. Referring to FIG. 7, the communication apparatus 200 includes: a communication module 201 and a processing module 202.

The processing module 202 is configured to determine timing information of a first carrier based on timing information related to a second carrier.

In some embodiments, the timing information of the first carrier is consistent with timing information of the second carrier; or there is a time offset between the timing information of the first carrier and the timing information of the second carrier.

In some embodiments, the second carrier includes any one of: a carrier contiguous with the first carrier in frequency domain among all carriers that have been activated; a carrier with a smallest frequency domain gap from the first carrier among all carriers that have been activated; a carrier with a frequency domain gap from the first carrier not exceeding a preset gap among all carriers that have been activated; a carrier corresponding to a special cell among all carriers that have been activated, where the special cell includes a primary cell and/or a primary secondary cell.

In some embodiments, the preset gap is configured through a signaling or is determined through a system predefinition manner.

In some embodiments, the timing information of the first carrier is consistent with timing information of a frequency band where the second carrier is located; or there is a time offset between the timing information of the first carrier and the timing information of the frequency band where the second carrier is located.

In some embodiments, the frequency band where the second carrier is located includes any one of: a frequency band contiguous with the first carrier in frequency domain among frequency bands where all carriers that have been activated are located; a frequency band with a smallest frequency domain gap from the first carrier among the frequency bands where all carriers that have been activated are located; a frequency band that forms a preset frequency band combination with a frequency band where the first carrier is located among the frequency bands where all carriers that have been activated are located; a frequency band where a carrier corresponding to a special cell is located among the frequency bands where all carriers that have been activated are located.

In some embodiments, the preset frequency band combination is configured through a signaling or is determined through a system predefinition manner.

In some embodiments, the communication module 201 is configured to receive first information, where the first information is used to indicate to determine the timing information of the first carrier based on the timing information of the second carrier or the timing information of the frequency band where the second carrier is located.

In some embodiments, the first information includes an identifier of the second carrier or an identifier of the frequency band where the second carrier is located.

In some embodiments, the first information further includes a time offset.

In some embodiments, timing information includes a boundary of a time unit, and/or an index of a time unit; or the first carrier and the second carrier satisfy a QCL-Type A; or the first carrier and the second carrier satisfy a QCL-Type C; or a reference signal of the first carrier and a reference signal of the second carrier satisfy the QCL-Type A; or a reference signal of the first carrier and a reference signal of the second carrier satisfy the QCL-Type C.

Additionally, another communication apparatus is provided in the embodiments of the present disclosure. Still referring to FIG. 7, the communication apparatus 200 includes: a communication module 201 and a processing module 202.

The processing module 202 is configured to determine whether a trigger condition for a first measurement feedback is satisfied.

The communication module 201 is configured to feed back a measurement report in response to that the trigger condition is satisfied. The measurement report includes a measurement result of a third carrier.

In some embodiments, the trigger condition includes at least one of: receiving information for activating the third carrier; receiving the information for activating the third carrier, and determining that the third carrier is in a first state, where the first state indicates that a network side is unaware of a channel feature of the third carrier; receiving information for indicating to perform the first measurement feedback.

In some embodiments, the communication module 201 is further configured to receive configuration information of a first event. The configuration information of the first event includes a first time gap, where the first time gap is a time gap from a moment of determining that the trigger condition is satisfied to a moment of feeding back the measurement report.

In some embodiments, the configuration information of the first event includes an event entry condition, where the event entry condition includes at least one of: satisfying the trigger condition, or there being a valid measurement result.

In some embodiments, the valid measurement result is a measurement result satisfying one or more of the following rules: the measurement result being an RRM measurement result, for example, an RRM measurement result of the third carrier; the measurement result being a physical layer measurement result, for example, a physical layer measurement result of the third carrier; a time gap between a moment of generating the measurement result or a moment of last measurement and a current moment not exceeding a time threshold. The measurement result includes one or more of: a reference signal received power (RSRP) corresponding to the third carrier, an RSPR1 corresponding to the third carrier, an SINR corresponding to the third carrier, an SSB index, or a CSI-RS index.

In some embodiments, the configuration information of the first event includes an event ending condition, where the event ending condition includes: completing feedback for one or more measurement results.

In some embodiments, the processing module 202 is further configured to perform a second activation procedure to activate the third carrier in response to that the third carrier is in the second state; where operations included in the second activation procedure is fewer than operations included in a first activation procedure, the second state indicates that the network side at least is aware of a portion of channel features of the third carrier.

In some embodiments, the second activation procedure includes one or more of: ignoring an automatic gain control operation on the third carrier; reducing a receiving beam sweeping factor; reducing a number of automatic gain control measurement samples for the third carrier; determining timing information of the third carrier based on timing information of a carrier that has been activated or timing information of a frequency band where a carrier that has been activated is located.

Additionally, a communication apparatus is further provided in the embodiments of the present disclosure. Still referring to FIG. 7, the communication apparatus 200 includes: a communication module 201 and a processing module 202.

The processing module 202 is configured to perform a trigger operation for a first measurement feedback.

The communication module 201 is configured to receive a measurement report, where the measurement report includes a measurement result of a third carrier.

In some embodiments, the trigger operation includes at least one of: sending information for activating the third carrier; sending information for indicating to perform the first measurement feedback.

In some embodiments, the processing module 202 is further configured to determine that the third carrier is in a first state in response to that a valid measurement result of the third carrier is not received, where the first state indicates that a network side is unaware of a channel feature of the third carrier; or determine that the third carrier is in a second state in response to that a valid measurement result of the third carrier is received, where the second state indicates that the network side at least is aware of a portion of channel features of the third carrier.

In some embodiments, the valid measurement result is a measurement result satisfying one or more of the following rules: the measurement result being an RRM measurement result, for example, an RRM measurement result of the third carrier; the measurement result being a physical layer measurement result, for example, a physical layer measurement result of the third carrier; a time gap between a moment of generating the measurement result or a moment of last measurement and a current moment not exceeding a time threshold. The measurement result includes one or more of: RSRP corresponding to the third carrier, an RSPR1 corresponding to the third carrier, an SINR corresponding to the third carrier, an SSB index, or a CSI-RS index.

Additionally, a communication apparatus is further provided in the embodiments of the present disclosure. Still referring to FIG. 7, the communication apparatus 200 includes: a communication module 201 and a processing module 202.

The communication module 201 is configured to receive fourth information, where the fourth information is used to indicate whether a terminal is allowed to simultaneously activate a plurality of antenna panels.

The processing module 202 is configured to activate an antenna panel based on the fourth information.

In some embodiments, the processing module 202 is configured to activate a plurality of antenna panels in response to that the fourth information indicates that the terminal is allowed to simultaneously activate a plurality of antenna panels; or activate an antenna panel in response to that the fourth information indicates that the terminal is not allowed to simultaneously activate a plurality of antenna panels.

In some embodiments, the fourth information includes an enable indication bit; the enable indication bit taking a first value indicates that the terminal is not allowed to simultaneously activate a plurality of antenna panels; or the enable indication bit taking a second value indicates that the terminal is allowed to simultaneously activate a plurality of antenna panels.

In some embodiments, the communication module 201 is further configured to send fifth information, where the fifth information is used to indicate whether the second node needs to activate a plurality of antenna panels.

Additionally, a communication apparatus is further provided in the embodiments of the present disclosure. Still referring to FIG. 7, the communication apparatus 200 includes: a communication module 201 and a processing module 202.

The processing module 202 is configured to determine fourth information.

The communication module 201 is configured to send the fourth information, where the fourth information is used to indicate whether a terminal is allowed to simultaneously activate a plurality of antenna panels.

In some embodiments, the fourth information includes an enable indication bit; the enable indication bit taking a first value indicates that the terminal is not allowed to simultaneously activate a plurality of antenna panels; or the enable indication bit taking a second value indicates that the terminal is allowed to simultaneously activate a plurality of antenna panels.

In some embodiments, the communication module 201 is further configured to receive fifth information, where the fifth information is used to indicate whether the second node needs to activate a plurality of antenna panels.

Additionally, yet another communication apparatus is further provided in the embodiments of the present disclosure. The communication apparatus includes a processor and a memory for storing a signaling executable for the processor; where the processor is configured to, upon executing the signaling, enable the communication apparatus to perform the communication method provided in the embodiments of the present disclosure.

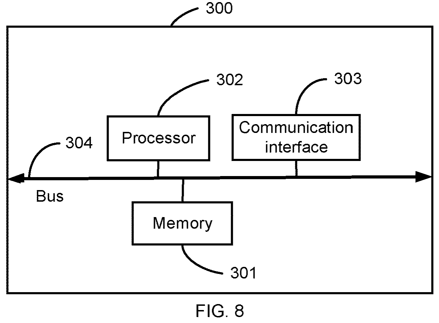

In a case where the functions of the above integrated modules are implemented in hardware, the embodiments of the present disclosure also provide a possible structure of a communication apparatus, where the communication apparatus is configured to execute the communication method provided by the embodiments of the present disclosure. As shown in FIG. 8, the communication apparatus 300 includes at least one of: a memory 301, a processor 302, a communication interface 303, and a bus 304.

The memory 301 may be a read-only memory (ROM) or another type of static storage device capable of storing static information and instructions, a random access memory (RAM) or another type of dynamic storage device capable of storing information and instructions, or an electrically erasable programmable read-only memory (EEPROM), a magnetic disk storage medium or other magnetic storage device, or any other medium capable of carrying or storing program code in the form of instructions or data structures and accessible by a computer, but not limited thereto.

The processor 302 may be configured to implement or execute various exemplary logic blocks, modules, and circuits described in the embodiments of the present disclosure. The processor 302 may be a central processing unit (CPU), a general-purpose processor, a digital signal processor (DSP), an application-specific integrated circuit (ASIC), a field programmable gate array (FPGA) or another programmable logic device, transistor logic device, hardware component, or any combination thereof. The processor 302 may implement or execute the various exemplary logic blocks, modules, and circuits described in the embodiments of the present disclosure. The processor 302 may also be a combination for implementing computing functions, for example, including one or more microprocessor combinations, a combination of a DSP and a microprocessor, etc.

The communication interface 303 is configured to connect to other devices through a communication network. The communication network may be an Ethernet, a radio access network, a wireless local area network (WLAN), etc.

In an embodiment, the memory 301 may exist independently from the processor 302. The memory 301 may be connected to the processor 302 through the bus 304, for storing instructions or program code (for example, computer program instructions, etc.) executable for the processor 302. When the processor 302 invokes and executes the instructions or program codes stored in the memory 301, the processor 302 may implement the communication method provided in the embodiments of the present disclosure.

In an embodiment, the memory 301 may also be integrated with the processor 302.

The bus 304 may be an extended industry standard architecture (EISA) bus, etc. The bus 304 may be classified as an address bus, a data bus, a control bus, or the like. For ease of representation, only one thick solid line is used in FIG. 8 for representing the bus 304, but it does not indicate that there is only one bus or one type of bus.

A computer-readable storage medium (for example, a non-transitory computer-readable storage medium) is provided in some embodiments of the present disclosure. The computer-readable storage medium stores computer program instructions, and when the computer program instructions are run on a computer (for example, the above-mentioned communication apparatus, base station, first terminal, second terminal, and processors thereof, etc.), the computer is enabled to perform the communication method described in any one of the above-mentioned embodiments. It should be understood that, the present disclosure imposes no limitation on the form of the computer.

In some embodiments, the above-mentioned computer-readable storage medium may include, but not limited to: a magnetic storage device (e.g., a hard disk, a floppy disk, or a magnetic tape, etc.), an optical disk (e.g., a compact disk (CD), a digital versatile disk (DVD), etc.), a smart card and a flash memory device (e.g., an erasable programmable read-only memory (EPROM), a card, a stick or a key driver, etc.). The various computer-readable storage medium described in the present disclosure may represent one or more devices for storing information and/or other machine-readable storage medium for storing information. The term "machine-readable storage medium" may include, but not limited to, a wireless channel and various other medium capable of storing, containing, and/or carrying instructions and/or data.

A computer program product including instructions is provided in the embodiments of the present disclosure, when the computer program product is run on a computer, the computer is enabled to perform the communication method as described in any one of the above-mentioned embodiments.

The above descriptions are merely implementations of the present disclosure, but the scope of protection of the present disclosure is not limited thereto; any variations or replacements within the technical scope disclosed in the present disclosure shall fall within the protection scope of the present disclosure. Therefore, the protection scope of the present disclosure shall be subject to the protection scope of the claims.

## Claims

1. A communication method, **characterized by** comprising:
determining timing information of a first carrier based on timing information related to a second carrier;
wherein the second carrier is a carrier that has been activated, and the first carrier is a carrier that is not activated, a carrier to be activated, or a carrier with a physical cell identifier (PCI) different from a PCI of the second carrier.

2. The method according to claim 1, wherein the timing information related to the second carrier comprises timing information of the second carrier;
the timing information of the first carrier is consistent with the timing information of the second carrier; or
there is a time offset between the timing information of the first carrier and the timing information of the second carrier.

3. The method according to claim 2, wherein the second carrier comprises any one of:
a carrier contiguous with the first carrier in frequency domain among all carriers that have been activated;
a carrier with a smallest frequency domain gap from the first carrier among all carriers that have been activated;
a carrier with a frequency domain gap from the first carrier not exceeding a preset gap among all carriers that have been activated;
a carrier corresponding to a special cell among all carriers that have been activated, wherein the special cell comprises a primary cell and/or a primary secondary cell.

4. The method according to claim 3, wherein the preset gap is configured through a signaling or is determined through a system predefinition manner.

5. The method according to claim 1, wherein the timing information related to the second carrier comprises timing information of a frequency band where the second carrier is located;
the timing information of the first carrier is consistent with the timing information of the frequency band where the second carrier is located; or
there is a time offset between the timing information of the first carrier and the timing information of the frequency band where the second carrier is located.

6. The method according to claim 5, wherein the frequency band where the second carrier is located comprises any one of:
a frequency band contiguous with the first carrier in frequency domain among frequency bands where all carriers that have been activated are located;
a frequency band with a smallest frequency domain gap from the first carrier among the frequency bands where all carriers that have been activated are located;
a frequency band that forms a preset frequency band combination with a frequency band where the first carrier is located among the frequency bands where all carriers that have been activated are located;
a frequency band where a carrier corresponding to a special cell is located among the frequency bands where all carriers that have been activated are located, wherein the special cell comprises a primary cell and/or a primary secondary cell.

7. The method according to claim 6, wherein the preset frequency band combination is configured through a signaling or is determined through a system predefinition manner.

8. The method according to claim 2 or 5, further comprising:
receiving first information, wherein the first information is used to indicate to determine the timing information of the first carrier based on the timing information of the second carrier or the timing information of the frequency band where the second carrier is located.

9. The method according to claim 8, wherein the first information comprises an identifier of the second carrier or an identifier of the frequency band where the second carrier is located.

10. The method according to claim 8, wherein the first information further comprises a time offset.

11. The method according to claim 1, wherein
timing information comprises a boundary of a time unit, and/or an index of a time unit.

12. A communication method, **characterized by** comprising:
determining whether a trigger condition for a first measurement feedback is satisfied;
in response to that the trigger condition is satisfied, feeding back a measurement report, wherein the measurement report comprises a measurement result of a third carrier.

13. The method according to claim 12, wherein the trigger condition comprises at least one of:
receiving information for activating the third carrier;
receiving the information for activating the third carrier, and determining that the third carrier is in a first state, wherein the first state indicates that a network side is unaware of a channel feature of the third carrier;
receiving information for indicating to perform the first measurement feedback.

14. The method according to claim 12, further comprising:
receiving configuration information of a first event, wherein the configuration information of the first event comprises a first time gap, and the first time gap is a time gap from a moment of determining that the trigger condition is satisfied to a moment of feeding back the measurement report.

15. The method according to claim 14, wherein the configuration information of the first event further comprises an event entry condition, and the event entry condition comprises at least one of: satisfying the trigger condition, or there being a valid measurement result.

16. The method according to claim 15, wherein the valid measurement result is a measurement result satisfying one or more of the following rules:
the measurement result being a radio resource management (RRM) measurement result;
the measurement result being a physical layer measurement result;
a time gap between a moment of generating the measurement result or a moment of last measurement and a current moment not exceeding a time threshold;
the measurement result comprising one or more of: a reference signal received power (RSRP) corresponding to the third carrier, an RSPR1 corresponding to the third carrier, a signal-to-interference-plus-noise ratio (SINR) corresponding to the third carrier, a synchronization signal and physical broadcast channel block (SSB) index, or a channel state information reference signal (CSI-RS) index.

17. The method according to claim 14, wherein the configuration information of the first event further comprises an event ending condition, and the event ending condition comprises: completing feedback for one or more measurement results.

18. The method according to claim 12, further comprising:
in response to that the third carrier is in a second state, performing a second activation procedure to activate the third carrier; wherein operations included in the second activation procedure is fewer than operations included in a first activation procedure, the second state indicates that a network side at least is aware of a portion of channel features of the third carrier, and the first activation procedure is a regular carrier activation procedure.

19. The method according to claim 18, wherein the second activation procedure comprises one or more of:
ignoring an automatic gain control operation on the third carrier;
reducing a receiving beam sweeping factor;
reducing a number of automatic gain control measurement samples for the third carrier;
determining timing information of the third carrier based on timing information of a carrier that has been activated or timing information of a frequency band where a carrier that has been activated is located.

20. A communication method, **characterized by** comprising:
performing a trigger operation for a first measurement feedback;
receiving a measurement report, wherein the measurement report comprises a measurement result of a third carrier.

21. The method according to claim 20, wherein the trigger operation comprises at least one of:
sending information for activating the third carrier;
sending information for indicating to perform the first measurement feedback.

22. The method according to claim 20, further comprising:
in response to that a valid measurement result of the third carrier is not received, determining that the third carrier is in a first state, wherein the first state indicates that a network side is unaware of a channel feature of the third carrier; or
in response to that a valid measurement result of the third carrier is received, determining that the third carrier is in a second state, wherein the second state indicates that the network side at least is aware of a portion of channel features of the third carrier.

23. The method according to claim 22, wherein the valid measurement result is a measurement result satisfying one or more of the following rules:
the measurement result being a radio resource management (RRM) measurement result;
the measurement result being a physical layer measurement result;
a time gap between a moment of generating the measurement result or a moment of last measurement and a current moment not exceeding a time threshold;
the measurement result comprising one or more of: a reference signal received power (RSRP) corresponding to the third carrier, an RSPR1 corresponding to the third carrier, an SINR corresponding to the third carrier, an SSB index, or a CSI-RS index.

24. The method according to claim 22, further comprising:
in response to that the third carrier is in a second state, indicating a terminal to perform a second activation procedure to activate the third carrier; wherein operations included in the second activation procedure is fewer than operations included in a first activation procedure, the second state indicates that a network side at least is aware of a portion of channel features of the third carrier.

25. The method according to claim 24, wherein the second activation procedure comprises one or more of:
ignoring an automatic gain control operation on the third carrier;
reducing a receiving beam sweeping factor;
reducing a number of automatic gain control measurement samples for the third carrier;
determining timing information of the third carrier based on timing information of a carrier that has been activated or timing information of a frequency band where a carrier that has been activated is located.

26. A communication method, **characterized by** being applied to a second node, wherein the method comprises:
receiving fourth information, wherein the fourth information is used to indicate whether the second node is allowed to simultaneously activate a plurality of antenna panels;
activating an antenna panel based on the fourth information.

27. The method according to claim 26, wherein the activating the antenna panel based on the fourth information comprises:
in response to that the fourth information indicates that the second node is allowed to simultaneously activate a plurality of antenna panels, activating a plurality of antenna panels; or
in response to that the fourth information indicates that the second node is not allowed to simultaneously activate a plurality of antenna panels, activating an antenna panel.

28. The method according to claim 26 or 27, wherein the fourth information comprises an enable indication bit;
the enable indication bit taking a first value indicates that the second node is not allowed to simultaneously activate a plurality of antenna panels; or
the enable indication bit taking a second value indicates that the second node is allowed to simultaneously activate a plurality of antenna panels.

29. The method according to claim 26, further comprising:
sending fifth information, wherein the fifth information is used to indicate whether the second node needs to activate a plurality of antenna panels.

30. A communication method, **characterized by** being applied to a first node, wherein the method comprises:
determining fourth information, wherein the fourth information is used to indicate whether a second node is allowed to simultaneously activate a plurality of antenna panels;
sending the fourth information.

31. The method according to claim 30, wherein the fourth information comprises an enable indication bit;
the enable indication bit taking a first value indicates that the second node is not allowed to simultaneously activate a plurality of antenna panels; or
the enable indication bit taking a second value indicates that the second node is allowed to simultaneously activate a plurality of antenna panels.

32. The method according to claim 30, further comprising:
receiving fifth information, wherein the fifth information is used to indicate whether the second node needs to activate a plurality of antenna panels.

33. A communication apparatus, **characterized by** comprising: a processor and a memory for storing instructions executable for the processor;
wherein the processor is configured to, upon executing the instructions, enable the communication apparatus to perform the method according to any one of claims 1 to 32.

34. A computer storage medium, **characterized in that** the computer-readable storage medium stores computer program instructions, wherein the computer program instructions, upon being run on a computer, enable the computer to execute the method according to any one of claims 1 to 32.
